# EUROPEAN PATENT APPLICATION

(11) **EP 3 091 145 A1**
(43) Date of publication of application: **09.11.2016**
(21) Application number: 16168563.1
(22) Date of filing: 06.05.2016
(51) Int. Cl.: E04H 4/16

(54) **UNDERWATER CLEANER**

(30) Priority: 08.05.2015 US 201562158754 P
(71) Applicant: Kokido Development Limited, Hong Kong (HK)
(72) Inventor: BRUNEEL, Jean Julien, Kowloon (HK)
(74) Representative: Loyer & Abello

(57) **Abstract**

An underwater cleaning apparatus includes an inlet opening (28) through which water is received and a body (22) having a first cavity (22A) and a second cavity (22B). A filter (52) is positioned in the first cavity (22A), with the filter (52) having a first end positioned adjacent the inlet opening (28) and a first end of the first cavity. A housing(23) having a motor and a battery partially extends into the second cavity (22B). An impeller (62) positioned in the body between the first cavity (22A) and the second cavity (22B) to draw in water through the inlet.

## Description

### BACKGROUND

### 1. Field of the Disclosure

The present disclosure relates to the field of cleaning devices. More particularly, the present disclosure relates to an underwater cleaner.

### 2. Background Information

Swimming pool cleaners are used to remove debris from swimming pools. Various designs have been proposed. Some existing cleaners use pressure or suction. Generally, debris is removed from water received by the cleaner.

Existing devices have limited utility, particularly with respect to their range of applications, maintenance, and re-energizing.

### BRIEF DESCRIPTION OF THE DRAWINGS

In the figures of the accompanying drawings, like reference numerals refer to similar elements and corresponding parts throughout the drawings.
FIG. 1 is a perspective partial cutaway view showing a right side of an underwater cleaner, according to an aspect of the present disclosure;
FIG. 2 is a partial cutaway view of the right side of the underwater cleaner, according to an aspect of the present disclosure;
FIG. 3 is a bottom partial cutaway view of the underwater cleaner, according to an aspect of the present disclosure;
FIG. 4 is a bottom perspective view of the underwater cleaner, according to an aspect of the present disclosure;
FIG. 5 is a bottom plan view of the underwater cleaner, according to an aspect of the present disclosure;
FIG. 6 is a front plan view of the underwater cleaner with the suction head cover removed, according to an aspect of the present disclosure;
FIG. 7 is a top plan view of the underwater cleaner, according to an aspect of the present disclosure;
FIG. 8 is a front plan view of the suction head cover of the underwater cleaner, according to an aspect of the present disclosure;
FIG. 9 is a perspective of the underwater cleaner having a handle attached, according to an aspect of the present disclosure;
FIG. 10 is a plan view of the right side of the underwater cleaner having a charger attached, according to an aspect of the present disclosure;
FIG. 11 is a perspective of a charger base, according to an aspect of the present disclosure;
FIG. 12 is a rear plan view of the underwater cleaner showing the charging socket, according to an aspect of the present disclosure;
FIG. 13 is an exploded view of a handle assembly of the underwater cleaner, according to an aspect of the present disclosure;
FIG. 14 is an exploded view of a handle assembly of the underwater cleaner, according to an aspect of the present disclosure;
FIG. 15 is an exploded view of the underwater cleaner with a handle extension, according to an aspect of the present disclosure;
FIG. 16 is an exploded view of the underwater cleaner with an extension handle, according to an aspect of the present disclosure; and
FIG. 17 is a schematic circuit diagram of the circuit arrangement of the cleaner, according to an aspect of the present disclosure.

### DETAILED DESCRIPTION

In view of the foregoing, the present disclosure, through one or more of its various aspects, embodiments and/or specific features or sub-components, is thus intended to bring out one or more of the advantages as specifically noted below.

Methods described herein are illustrative examples, and as such are not intended to require or imply that any particular process of any embodiment be performed in the order presented. Words such as "thereafter," "then," "next," etc. are not intended to limit the order of the processes, and these words are instead used to guide the reader through the description of the methods. Further, any reference to claim elements in the singular, for example, using the articles "a," "an" or "the", is not to be construed as limiting the element to the singular.

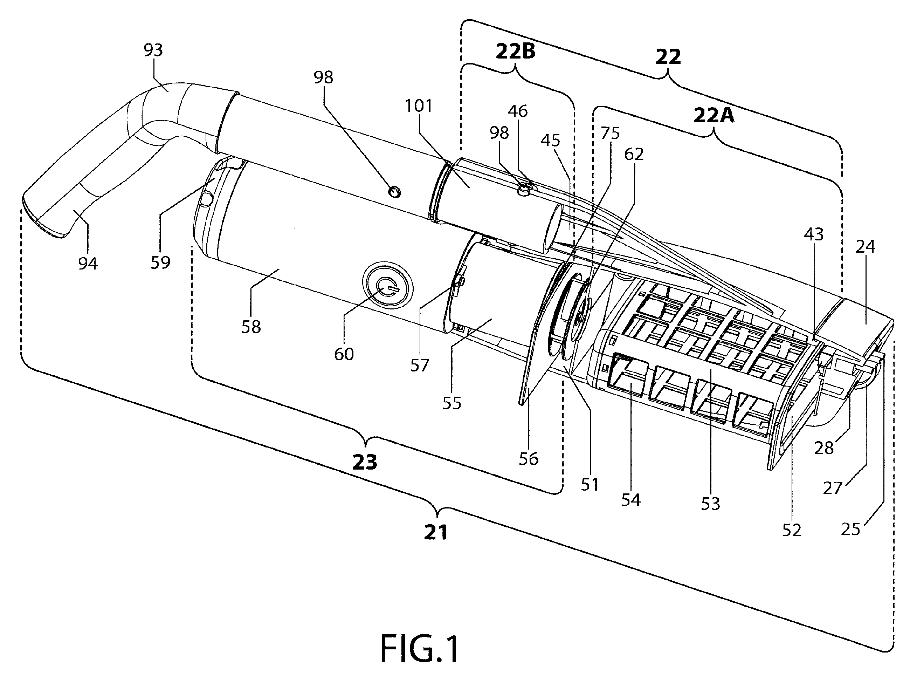

FIG. 1 is a perspective partial cutaway view showing a right side of an underwater cleaner, according to an aspect of the present disclosure. A cleaner 21 includes a suction head body 22 and a cylindrically-shaped working compartment housing 23. The suction head body 22 is the main body of the cleaner 21, providing room for a filter and for water to be ingested into the cleaner 21. In a one embodiment, the suction head body 22 is a trapezoidally-shaped body having a wider end at a front end of the suction head body 22 than at the rear end of the suction head body. The suction head body has an opening at a point between a first end of the suction head body 22 and a second end of the suction head body 22 which serves as an exit for the discharge of ingested water. The trapezoidal shape provides for a wider cleaning area at the front end and the tapered design of the trapezoidal shape serves to funnel ingested water and debris into the suction head body 22.

The suction head body 22 has a first cavity 22A and a second cavity 22B and accommodates a filter 52 in the first cavity 22A for filtering water ingested by the cleaner 21. The filter 52 is supported by a filter frame 53 having a first end positioned at a front end of the suction head body 22, adjacent an inlet opening 28 and a first end of the first cavity 22A. The inlet opening 28 is an opening through which water is received or ingested by the cleaner 21.

As shown in FIG. 1, the filter frame 53 is skeletal or grid structure beginning at a first end of the filter 52 and extending substantially an entire length of the filter 52 rearwardly within the first cavity 22A of the suction head body 22. The filter frame 53 supports a filter net 54 which filters debris and/or particulate from ingested water. Since the filter 52 is positioned within the first cavity 22A of the suction head body 22, debris in water ingested by the cleaner 21 is collected by the filter 52 is trapped within the first cavity 22a of the suction head body 22. The first end of the filter frame 53 is positioned adjacent the inlet opening 28 and a first end of the first cavity 22A, for example, between the inlet opening 28 and the first end of the first cavity 22A. In an alternative embodiment, the filter 52 is a substantially bag-like structure supported only at one end or both ends, rather than extending substantially an entire length of the filter 52.

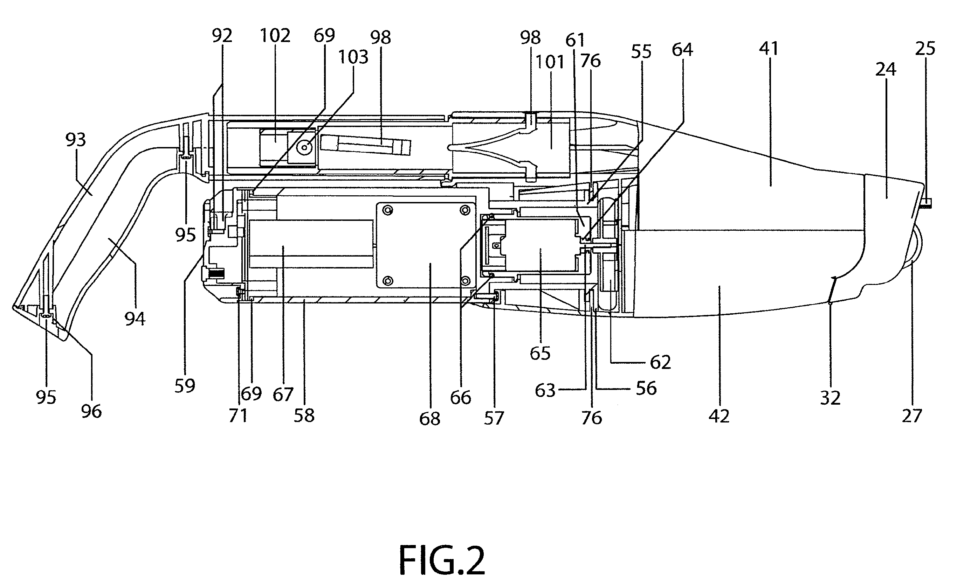

As shown in FIGS. 1, 3 and 5, the first cavity 22A and second cavity 22B are separated by a side slot opening 49 which is an opening space in the body extending from and through one lateral side wall of the suction head body 22 to and through the other lateral side wall of the suction head body 22, thus extending through the body in a lateral direction. Top and bottom surfaces of a suction head top section 41 and a section head bottom section 42 extend the length of the suction head body 22, including on a top and a bottom portion of the suction head body 22 where the side slot opening 49 is positioned, as shown in FIG. 2. Thus, the side slot opening 49 is an opening in the body formed from a space between the first cavity 22A and the second cavity 22B which allows water to be discharged from a water discharge channel 51 that is positioned around an impeller 62. In one embodiment, the a plurality of ribs extend across the side slot opening 49 so as to prevent fingers from being inserted into the side slot opening 49 and coming into contact with the impeller 62.

The working compartment housing 23 includes a motor compartment 55 and a battery and operation compartment 58. A portion of the working compartment housing 23 is positioned in the second cavity 22B of the suction head body 22 and the remaining portion of the suction head body 22 extends out of the second cavity 22B of the suction head body 22, such that at least a portion of the working compartment housing 23 is positioned rearwardly in the suction head body 22, and rearwardly of the side slot opening 49. The battery and operation compartment 58 includes a battery, printed circuit board (PCB), and a switch assembly. The motor compartment 55 accommodates a motor housing 61 having a motor 65 inside of the motor housing 61 to operate the cleaner 21, as shown in FIG. 2.

The motor 65 is configured to rotate a shaft 63 (FIG. 2) upon which the impeller 62 is attached and which in turn rotates the impeller 62 positioned between the first cavity 22A and the second cavity 22B in the suction head body 22. The impeller 62 is configured to generate a suction force by its rotation such that when rotating, the impeller 62 sucks or draws in water through the inlet opening 28 in the suction head cover 24. Once ingested water enters the suction head cover 24, it passes through the filter 52 in the first cavity 22A of the suction head body 22.

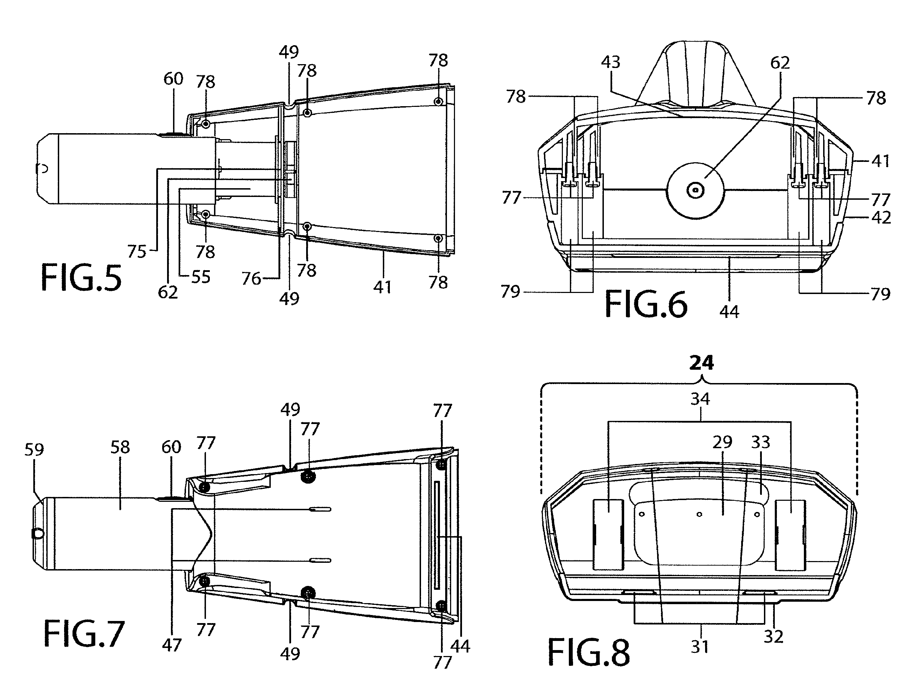

The suction head cover 24 is a cover positioned at an opening of the suction head body 22, and in particular on a front of the first cavity 22a. The suction head cover 24 is removably attachable to the first cavity 22A of the suction head body 22 at the front end of the suction head body 22 by snapping at least one locking rib 31 on the suction head cover 24 onto a top locking notch 43 on a top edge of the suction head top section 41 of the suction head body 22 and on suction head bottom locking notch 44 on a bottom edge of the suction head bottom section 42 of the suction head body 22 (FIGS. 6 and 8), such that the at least one locking rib 31 mates with at least one of the locking notches 43, 44, thus locking the suction head 24 onto the suction head body 22. In a one embodiment, two locking ribs 31 mate with a respective one of the locking notches 43, 44. This arrangement secures the suction head cover 24 to the suction head body 22, yet allows the suction head cover 24 to be removed from the suction head body 22 as desired by the user, as will be discussed.

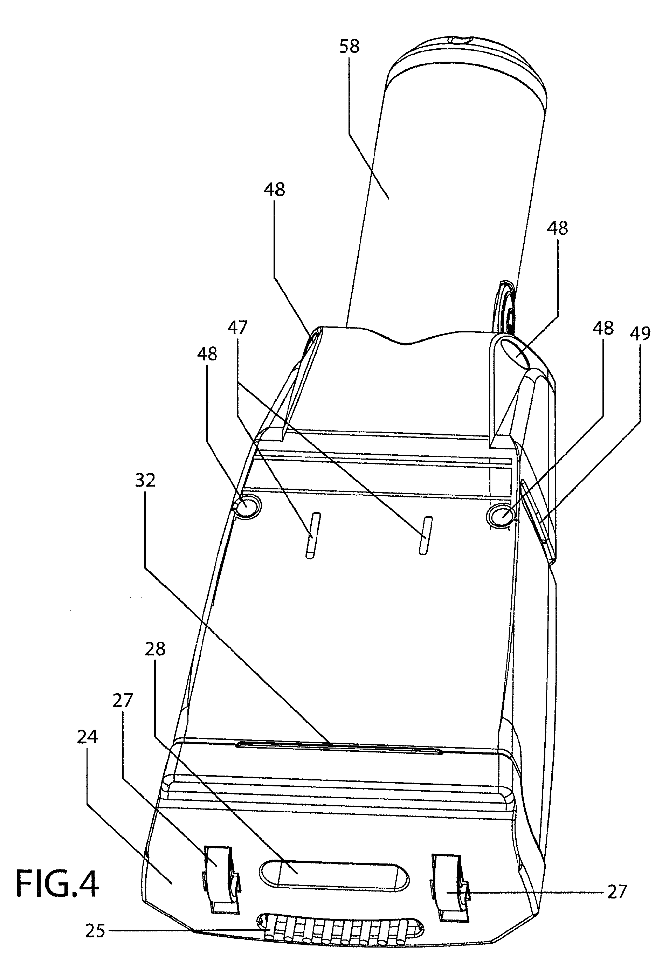

As shown in FIGS. 4 and 8, the suction head cover 24 includes a removable brush 25, two wheels 27, the inlet opening 28, and a flexible flapper 29. The wheels 27 are each accommodated in a separate wheel chamber 34. Each of the wheel chambers 34 are a recess within which each wheel is positioned. As shown in FIG. 4, the depth of each of the wheel chambers 34 is such that each of the wheels 27 extends out of the wheel chamber 34 a sufficient enough to permit the wheel 27 to spin freely and move the cleaner 21 across a surface to be cleaned. Each of the wheel chambers 34 may also include a slot (not shown) to support an axle of each of the wheels 27.

The brush 25 is accommodated in a brush chamber 33 (FIGS. 4 and 8). The brush chamber 33 is a recess provided in the suction head cover 22 that allows a backing substrate of the brush 25 to be held via friction in the brush chamber 33. The recess of the brush chamber 33 has a depth that allows the bristles of the brush 25 to protrude from the recess to contact a surface to be cleaned. The brush 25 is a removable brush that serves to agitate debris and/or particulate on a surface to be cleaned such that it can be ingested, along with water, through the inlet opening 28 in the suction head body 22. When desired, the user may remove the brush 25 from the brush chamber 33 to clean or replace the brush 25.

A user may remove the suction head cover 24 when desiring to replace the filter 52 or when desiring to clean debris from the filter 52 and or from the suction head body 22. After the debris and/or particulate is ingested through the inlet opening 28, the debris and/or particulate become trapped in the filter 52 within the first cavity 22A of the suction head body 22, for later cleaning and removal by the user. The flexible flapper 29 is a rubber or polymer flapper attached to the inlet opening 28 and acts a door or gate to allow water in through the inlet opening 28 when the cleaner 21 is ON, and remains closed when the cleaner 21 is OFF. That is, the suction force generated by the impeller 62 when it is rotating opens the flapper 29 when the impeller is rotating, thus exposing the inlet opening 28. Conversely, a lack of suction force due to an idle impeller 62 causes the flapper 29 to close, thus closing the inlet opening 28, preventing debris from escaping from the first cavity 22A.

The filter 52 serves to collect debris and particulate when water is traversing through the filter. The net 54 of the filter 52 extends within the first cavity 22A of the suction head body 22, which serves to filter particulate and debris from the ingested water, yet allows ingested water to pass through the filter frame 53. Particulate and debris filtered by the net 54 includes sand, dirt, dust, pollen, insects, leaves, grass, flowers, toys, food, etc. In one embodiment, the net 54 is integrally formed with the filter frame 53. In another embodiment, the net 54 is affixed to the inside or outside of the filter frame 53. In another embodiment, the net 54 is sandwiched between upper and lower halves of the filter frame 54. In one embodiment, multiple filter frames may be provided with differing gauge nets so that the user may select between a fine mesh for filtering small particles and a large mesh for filtering only larger particles.

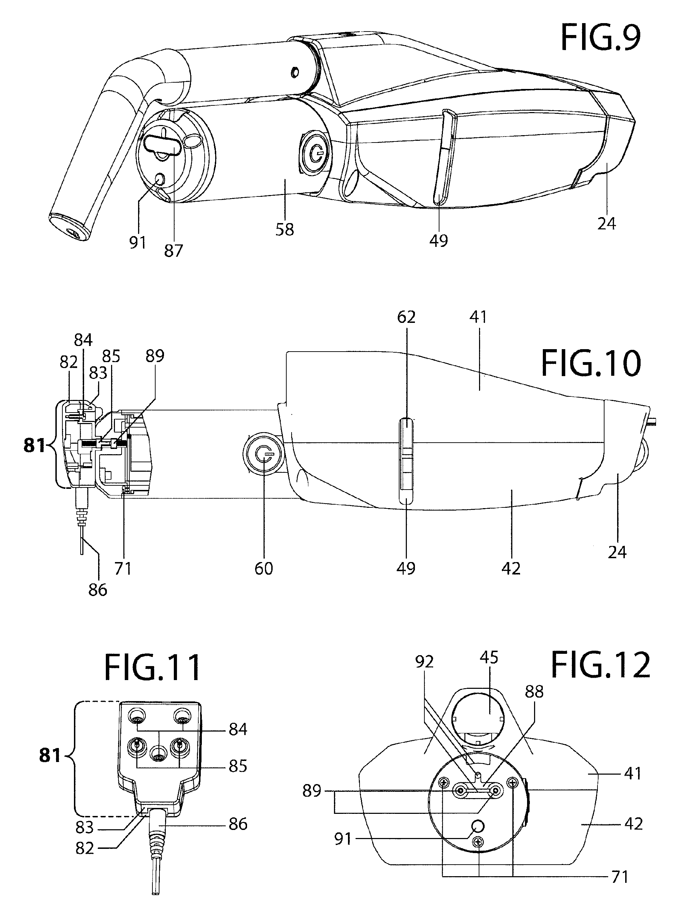

The impeller 62 is located to the rear of the filter 52 with a space between the filter 52 and the impeller 62, such that the filter 52 is unattached to any structure other than between the inlet opening 28 and the first end of the first cavity 22A, i.e., between the first cavity 22A and the suction head cover 24. As shown in FIG. 10, the impeller 62 is located in a side slot opening 49, which is a slot-like opening allowing for the discharge of ingested water, after having been filtered by the filter 52 as the water passed through the first cavity 22A. After passing through the first cavity 22A, the water enters a water discharge channel 51 having side walls 76, before contacting a motor compartment front plate 56.

The impeller 62 is attached to the shaft 63 and is driven by the motor 65 to rotate when a user depresses a flexible ON/OFF switch membrane 60. The flexible ON/OFF switch membrane 60 covers a power ON/OFF switch 72 that controls the supply of electrical current from a battery 67 in the battery and operation compartment 58 to the motor 65. A shaft seal 64 provides a seal around the shaft 63 to protect the shaft 63 and the motor 65 from dirt, fluids, and other contaminants. As indicated, when the impeller 62 rotates, a suction is generated which causes water to be ingested through the inlet opening 28 in the front of the cleaner 21.

To the rear of the impeller 62, the motor compartment front plate 56, even with the side slot opening 49 and separating the second cavity 22B from the first cavity 22A, maximizes a flow of water that has traversed the suction head body 22 from a first end of the suction head body 22 and was discharged from the water discharge channel 51. From the water discharge channel 51, the water contacts the motor compartment front plate 56 which serves to direct the water out of the side slot opening 49 located through the suction head body 22. The motor compartment front plate 56 resides in the suction head body 22 and is aligned with the side slot opening 49, and directs a flow of water ingested by the cleaner 21 to the side slot opening 49. The motor compartment 55, which houses the motor 65, is positioned behind the motor compartment front plate 56. A motor compartment round hollow section 75 under the motor compartment front plate 56 interlocks with a side wall 76 (FIG. 2) on suction head sections 41 and 42 in order to secure the working compartment housing 23 and its position inside the suction head body 22. A plate 50 having an aperture 50a is positioned forward of the motor compartment front plate 56 and substantially even with the impeller 62. Thus, water passing through the filter 52 and the first cavity 22A enters the aperture 50a to enter the space around the impeller 62 and side slot opening 49. Some of the water at this point exits the side slot opening 49, while some of the water enters the water discharge channel 51 and is deflected out of the cleaner through the side slot opening 49.

A compartment end cover 59 is installed on the battery and operation compartment 58 of the working compartment housing 23 and includes charging chamber 88, flexible charging chamber cover 87, and contact plate 91 (FIGS. 9, 10, 12), as will be discussed. Additionally, the compartment end cover 59 is a closure for the rear end of the battery and operation compartment 58.

In a one embodiment, the battery 67 is a rechargeable battery. Specifically, the battery 67 includes at least one rechargeable lithium ion (Li-ion) battery. In other embodiments, at least one nickel cadmium (NiCd) battery, at least one nickel-metal hydride (NiMH) battery battery, or at least one lithium ion polymer (Li-ion) battery is employed to supply power to the cleaner 21. Rather, than one battery, multiple batteries may be electrically connected. The battery 67 supplies power to the cleaner 21 to operate the motor 65. In another embodiment, power supplied by the battery 67 also operates accessories, lighting, and/or LED displays.

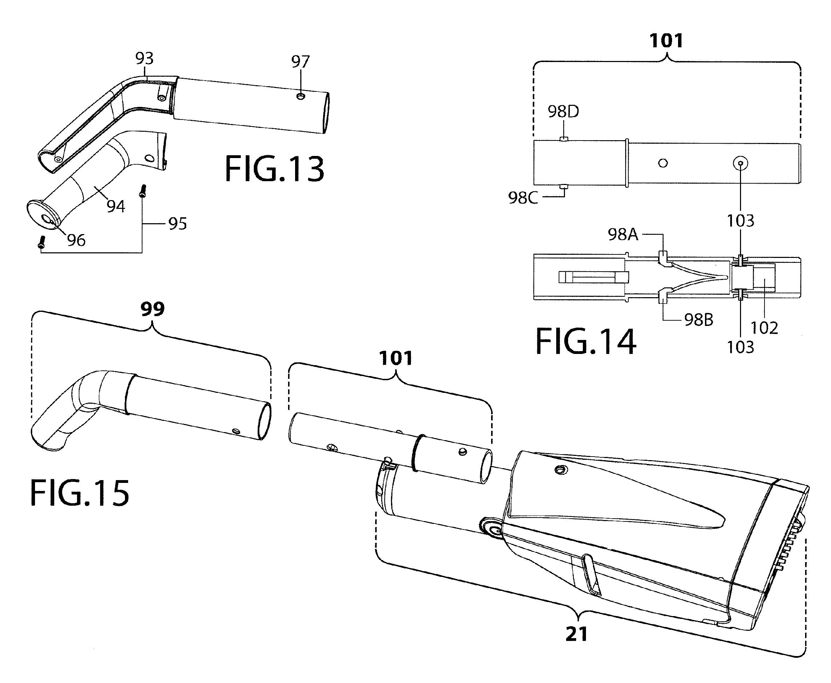

A pole handle connector assembly chamber 45 is located on a top side of the suction head top section 41 and accommodates a pole handle connector 101 (FIG. 14). A pole handle connector v-clip locking hole 46 is a hole on a top side of the pole handle connector assembly chamber 45 to secure a v-clip 98 installed inside the pole handle connector 101 in order to secure the pole handle connector 101 to the pole handle connector chamber 45 (FIG. 14). A tab end on the v-clip 98 is depressed for insertion into the pole handle connector assembly chamber 45, and when tab end is aligned with a corresponding v-clip locking hole 46 in the pole handle connector assembly chamber 45, the spring biases tab end extends or protrudes through the v-clip locking hole 46 to secure the handle or pole handle connector 101 in place. As shown, a pole handle connector 101 handle includes a handle upper half 93 and a handle lower half 94. Once the pole handle connector 101 is installed in the pole handle connector assembly chamber 45, handles of varying lengths may be installed onto the pole handle connector assembly 101, as desired by the user.

FIG. 2 is a partial cutaway view of the right side of the underwater cleaner, according to an aspect of the present disclosure. As shown, the brush 25 extends from a periphery of the suction head cover 24, above the wheels 27, in order to facilitate the agitation of debris and particulate from a surface to be cleaned. Since the brush 25 is positioned above the inlet opening 28, loosened debris and particulate is more likely to be ingested into the inlet opening 28, and the inlet opening 28 is located closer to a surface being cleaned. The suction head cover 24 includes a upper forward edge which extends further from the main body of the suction head cover 24 than the lower forward edge, which provides a better contact area when the suction head cover 24 is placed against a surface to be cleaned.

A flange 32 is provided on a bottom edge of the suction head cover 24 in order that the user may perform a prying operation to detach the removably attached suction head cover 24 from first cavity 22A of the front end of the suction head body 22, when the user wishes to, for example, clean the filter 52. In this case, the user can pry on or just adjacent to the flange 32 which provides the user with sufficient leverage to safely remove the suction head cover 24 from the suction head body 22, without damaging the suction head cover 24 or the suction head body 22. The flange 32 is a raised projection that extends laterally across the suction head 24 in a lateral direction across at least a portion of the cover, as shown in FIG. 4.

The motor 65 and the battery 67 are located within the working compartment housing 23. The motor 65 is located within the motor housing 61 within the motor compartment 55, located beneath a mid-line of the suction head body 22, in order to provide a balanced and stable platform. A shaft 63 extends outwardly from the motor 65 toward the first cavity 22A and provides a structure upon which the impeller 62 is mounted. Thus, operation of the motor 65 causes the shaft 63 to rotate, which in turn rotates the impeller 62. Motor compartment screws 57 or other fasteners are provided to affix the motor compartment 55 to a top of the battery and operation compartment 58. A motor compartment front plate 56 located just forwardly of the motor compartment 55 provides mechanism to redirect water passing through the suction head body 22 and the impeller 62 side slot opening 49. A flexible motor compartment sealing ring 66 is provided around the motor housing 61 to provide a seal inside the battery and operation compartment 58 to prevent water from entering the working compartment housing 23.

The battery and operation compartment 58 is a chamber for the battery 67, a printed circuit board (PCB), and power ON/OFF switch 72. A PCB mounting base 68 provides a base for accommodating the ON/OFF switch 72 and the PCB assembly thereon. The PCB provides the necessary electrical components to support the switches, battery, and other electronic components using conductive tracks, pads, and other features etched from copper sheets laminated onto a non-conductive substrate.

The battery 67 is mounted rearwardly of the PCB mounting base 68 within the battery and operation compartment 58. In order to protect the battery and other delicate components within the battery and operation compartment, a flexible compartment end cover sealing ring 69 is a flexible ring provided under the compartment end cover 59 to prevent water from entering the battery and operation compartment 58. The flexible compartment end cover sealing ring 69 is provided under the end cover 59, which is attached to the battery and operation compartment 58 by screws 71 or other fasteners.

As shown, a charging chamber aqueduct 92 is provided in the charging chamber 88 to allow for the draining of water from the charging chamber 88.

The handle assembly includes a handle top section 93 secured to a handle bottom section 94 by screws 95 or other fastener. A draining hole 96 is provided in the end of the handle to allow water to drain out of the handle.

As discussed, the v-clip 98 having a tab 98A, 98B on each end is provided to secure a pole handle connector 101 to the pole handle connector assembly chamber 45. The pole handle connector 101 includes a threaded connector 102 secured to the pole handle connector 101 with a rivet 103 or other fastener.

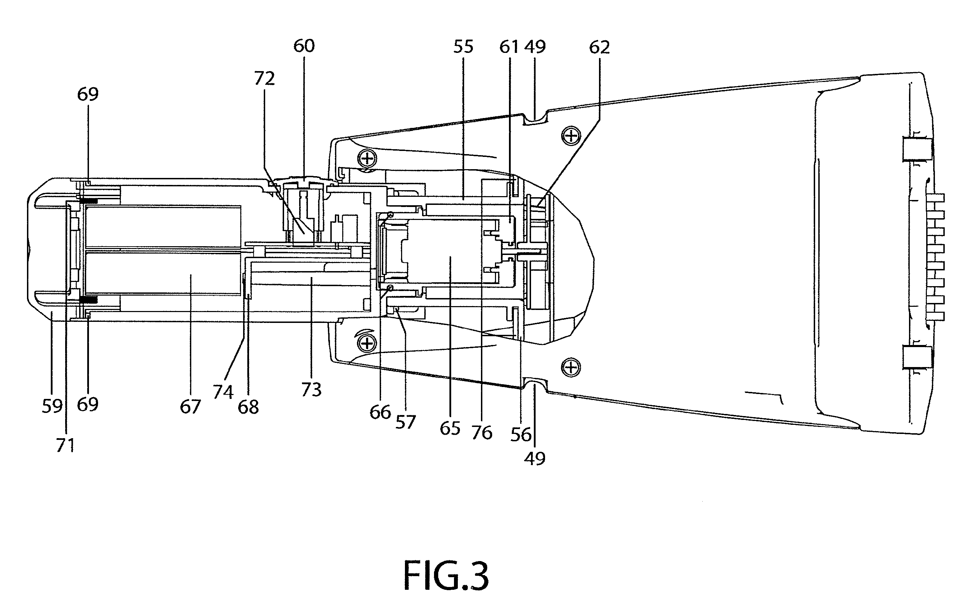

FIG. 3 is a bottom partial cutaway view of the underwater cleaner, according to an aspect of the present disclosure. The impeller 62 is positioned within the side slot opening 49, and opening in the suction head body 22, between the first cavity 22A and the second cavity 22B, immediately adjacent and forward of the motor compartment front plate 56. The motor compartment screw 57 or other fastener is provided to affix the motor compartment 55 to the battery and operation compartment 58.

Thus, water contacting the motor compartment front plate 56 from the water discharge channel 51 around the impeller 61 is directed to the side slot opening 49, an opening in the suction head body 22, to an exterior of the cleaner 21. That is, since water from the water discharge channel 51 contacting the front plate 56 has nowhere else to go, it moves either to the left or to the right to the side slot opening 49. As shown, the motor 65 is housed within the motor housing 61, which is inside the motor compartment 55, which provides a watertight seal. In this regard, a flexible motor compartment sealing ring 66 is provided around the motor housing 61 to provide a seal inside the batter and operation compartment 58 to prevent water from entering the working compartment housing 23.

The flexible ON/OFF switch 60 is electrically and/or mechanically connected to the power ON/OFF switch 72. Depressing the flexible ON/OFF switch 60 will in turn depress the power ON/OFF switch 72 to turn ON and OFF the motor 65 (depressing once will turn the motor 65 ON and depressing again will turn the motor 65 OFF) by controlling electrical current sent from the battery 67. That is, when the user depresses the flexible membrane switch 60, which causes the ON/OFF switch 72 to be depressed, electric current is sent from the battery 67 to the motor 65 to operate the motor 65. When the motor 65 is ON, the motor 65 causes the shaft 63 to spin, which in turn causes the impeller 62, connected to the shaft 63, to rotate about the shaft 63.

A PCB mounting base 68 provides a base for accommodating the ON/OFF switch 72 and a PCB assembly thereon. The PCB provides the necessary electrical components to support the switches, battery, and other electronic components using conductive tracks, pads, and other features etched from copper sheets laminated onto a non-conductive substrate. The PCB mounting base 68 is fixed on the extended screw post 73 with a PCB mounting base screw 74 or other fastener. In another embodiment, a circuit card assembly (CCA), a printed wiring board (PWB), or a printed circuit board assembly (PCA) is used in place of or in addition to the PCB.

A flexible compartment sealing ring 69 is a flexible ring provided in the compartment end cover 59 in order to prevent water from going into the battery and operation compartment 58 and, for example, reaching the battery 67.

FIG. 4 is a bottom perspective view of the underwater cleaner, according to an aspect of the present disclosure. As shown, the suction head body 22 is narrower on a lower surface thereof than on an upper surface thereof. Two standing feet 47 are provided on the underside of the suction head body 22 to stabilize the cleaner 21 when the cleaner 21 is rested upon a surface. Screw chambers 48 are provided on an underside of the suction head body 22 to secure the suction head top section 41 to the suction head bottom section 42. In an alternative embodiment, the one piece suction head body 22 may be formed from one integral body, rather than a top section 41 and a bottom section 42, in which case screw chambers 48 are not needed..

As noted, the flange 32 is provided with which the user may pry the suction head cover 24 off of the suction head body 22, for example, to clean or replace the filter. The user may use a fingernail, coin, screwdriver, knife, or other suitable implement to pry the suction head cover 24 off of the suction head body 22. As shown, the inlet opening 28 is a slot having rounded ends; although, a rectangular slot may also be employed. The inlet opening 28 is the opening by which water and debris are ingested by the cleaner 21 by virtue of a suction force created by rotation of the impeller 62, for example, during a cleaning operation. The plurality of wheels 27 enable the user to easily maneuver the cleaner 21 across a surface to be cleaned. In another embodiment, rollers may be employed rather than wheels. While the brush 25 is shown to include a plurality of bristles having suitable resiliency to loosed dirt and debris which may be encountered on a surface to be cleaned, other configurations such as a squeegee may be used.

In an alternative embodiment the suction head cover 24 is configured to accept a pivoting head or a nozzle head with brushes. For example, a pivoting head or a nozzle head with brushes may include conduit-like male end that is removably fitted into the inlet opening 28 as desired by the user.

FIG. 5 is a bottom plan view of the underwater cleaner, according to an aspect of the present disclosure. A plurality of posts 78 are configured to receive screws 77 or other suitable fasteners, and are positioned in screw chambers 48 (FIG. 5) to secure the suction head to section 41 to the suction head bottom section 42. The motor compartment 55 is located just to the rear of the water discharge channel side wall 76 of the water discharge channel 51 and the impeller 62, in order to provide an efficient drive chain in order to drive the impeller 62. The flexible membrane ON/OFF switch is located on a side of the working compartment housing 23; although, any suitable location will suffice.

FIG. 6 is a front plan view of the underwater cleaner with the suction head cover 24 removed, according to an aspect of the present disclosure. The impeller 62 is located at approximately a midline of the suction head body 22. The suction head top locking notch 43 located on a top edge of the suction head top section 41 is provided to allow the locking rib 31 (FIG. 8) to snap on to the suction head top section 41. Similarly, a suction head bottom locking notch 44 is located on a bottom edge of the suction head bottom section 42 to allow to allow the locking rib 31 (FIG. 8) to snap on the suction head bottom section 42.

As shown, the screws 77 or other fasteners are used to secure the suction head bottom section 41 to the suction head top section 42 through screw posts 78 inserted through screw posts chambers 79.

FIG. 7 is a top plan view of the underwater cleaner, according to an aspect of the present disclosure. As shown, the profile of the cleaner 21 is advantageously compact and ergonomic. The standing feet 47 are located forward of the side slot opening 49 to provide a stable platform for the cleaner 21 when resting upon a surface.

FIG. 8 is a front plan view of the suction head cover of the underwater cleaner, according to an aspect of the present disclosure. The flexible flapper 29 is a substantially rectangular on the inlet opening 28 and functions as a door or gate to allow water through the inlet opening 28 when a suction force is generated by a rotating impeller 62. Additionally, the flexible flapper 29 closes when the impeller 62 is idle, that is, when no suction force is being generated. The brush chamber 33 is a slot-like recess that houses the brush 25. The wheel chambers 34 are substantially rectangular and are provided on either side of the inlet opening 28, shown as being covered by the flexible flapper 29.

FIG. 9 is a perspective of the underwater cleaner having a handle attached, according to an aspect of the present disclosure. A flexible charging chamber cover 87 is a horizontal rubber or polymer protective cover that covers the charging chamber 88 on a rear of the battery and operation compartment 58 on the working compartment housing 23, so that debris does not enter the charging chamber 88, when the charging chamber 88 is not being used for a charging operation. When a user desires to charge the battery 67, the user pulls back on an edge of the chamber cover 87 which will reveal chamber socket 89 which includes a two contacts disposed within charging holes in the end cover 59 of the working chamber housing 23. A contact plate 91 or diode near the charging chamber 88 prevents a short circuit condition, in a known manner, as could happen with current flow across the contacts in the charging socket 89, particularly in water.

FIG. 10 is a plan view of the right side of the underwater cleaner having a charger attached, according to an aspect of the present disclosure. At least one screw 71 or other fastener secures the compartment end cover 59 onto the battery and operation compartment 58. The charger base 81 is connected to the cleaner 21 by the user for recharging the battery 67.

The removably attachable charger base 81 includes a charger base top section 82 and a charger base bottom section 83, which are secured by a assembly screw 84 or other fastener. A pair of charging pins 85 that extend from the charger base bottom section 83 are adapted for a user to plug the charging pins 85 into charging socket 89 on the compartment end cover 59 for charging the battery 67. When the charger 81 is connected to the cleaner 21 as shown, the charging pins 85 make an electrical communication with the pair of contacts in charging holes of the charging chamber 88 in the end cover 59. When a supply cord 86 is connected to an AC source, the battery 67 is placed into a charging operation.

As shown, the charging pins 85 are inserted into the socket 89 in the compartment end cover 59 of the working chamber housing 23, and by virtue of the same, the charger 81 is entirely supported without the need for brackets and/or hooks on either of the rear body compartment end cover 59, the battery and operation compartment 58 or the charger 81. While shown on the compartment end cover 59, the charging socket 89 may be located anywhere on the cleaner 21 and the number of charging holes and electrical contacts is not limited to two, but may be any suitable number.

Advantageously, since the pair of charging pins 85 are configured to hold and support the charger 90 onto the rear body 12, no additional brackets, clips, or other structure susceptible to breakage is required to be incorporated into the charger 90 and/or the rear body 12.

FIG. 11 is a perspective of a charger base, according to an aspect of the present disclosure. The charger base 81 includes the charge base top section 82 and the charger base bottom section 83. The charging pins 85 extend from the charger base bottom section 83 in order to plug into the socket 89 of the charging chamber 88, thus electrically connecting the electrical contacts in the socket 89 with the charging pins 85. After a charging operation, the user unplugs the charger 81 and the charging pins 85 from the socket 89 and then replaces the flexible charging chamber cover 87.

Screws 84 or other fasteners are provided for assembling the charger base top section 82 to the charger base bottom section 83; although, the charger 81 may be one integral piece, in which case screws are not needed. In one embodiment, the charging pins 85 are at least 5 mm in length, corresponding to a socket 89 depth of 6 mm, such that the weight of the charger will be supported by virtue of the charging pins 85 being inserted into the socket 89. As noted, the charging pins 85 serve a dual purpose in that they also provide for the attachment of the charger 81 to the compartment end cover 59 of the battery and operation compartment 58 of the cleaner 21. It is noted that other lengths of the charging pins 85 may be used and that other depths of the socket 89 may be used, such that the that attachment of the charger 81 to the end cover 59 is facilitated.

As shown in FIG. 11, the charger 81 is a generally square-shaped structure; although, any suitable shape may be used. In one embodiment, the shape of the charger 81 may generally correspond to the shape of the compartment end cover 59. In one embodiment, the charger is made of substantially the same material as the compartment end cover 59.

When the charging pins 85 are plugged into the charging socket 89 and the electrical supply cord 96 is connected to an appropriate source, such as a 220 volt or 110 volt alternating current source, the battery 67 will begin to charge. In a known manner, the alternating current input is stepped down by a transformer which lowers the voltage for conversion to direct current. The charger 81 is configured to sense a no load voltage and then increase the voltage until some fixed amount of current is being supplied to the battery. A temperature sensor may be used along with voltage and current readings to discontinue the charging current at an appropriate time, such as when a charging operation is complete

FIG. 12 is a rear plan view of the underwater cleaner showing the charging socket, according to an aspect of the present disclosure. A charging chamber 88 includes a substantially oval recess having the charging socket 89 disposed therein. The charging socket 89 includes positive and negative contacts each configured for receiving a respective positive or negative charging pin 85. A charging chamber aqueduct 92 is a channel in the charging chamber 88 that allows for the drainage of water from the charging chamber 88. Thus, water entering the charging chamber is readily removed by tipping the cleaner 21 upward so that the water drains from the charging chamber aqueduct 92 by gravity. As discussed, the contact plate 91 ensures the prevention of a polarity short circuit as the cleaner 21 is used in water.

FIG. 13 is an exploded view of a handle assembly of the underwater cleaner, according to an aspect of the present disclosure. The handle assembly includes a handle upper section 93 and a handle lower section 94 that are secured together by handle assembly screws 95 or other fasteners. In one embodiment, the handle assembly is one integral piece. The handle assembly includes a v-clip positioning hole 97 adapted to receive a tab 98A or 98B of the pole handle connector 101 (installed in the pole handle connector chamber 45), in order to secure the handle to the cleaner 21. The v-clip positioning hole 97 is a hole on both sides of the handle assembly to receive a tab 98A and 98B of the v-clip 98 installed inside pole handle connector 101 in order to secure the pole handle connector 101 to the cleaner 21, as shown in FIG. 15. The pole handle connector 101 may be used to secure either a handle or a pole to the cleaner 21.

FIG. 14 is an exploded view of a pole handle connector of the underwater cleaner, according to an aspect of the present disclosure. The pole handle connector 101 includes a v-clip 98, a threaded connector 102, and a rivet 103. The v-clip 98 is a substantially v-shaped clip inside of the pole handle connector 101 including spring biased arms having two end tabs 98A and 98B that are adapted to protrude through holes in the pole handle connector 101. The two end tabs 98A and 98B extend through holes in respective handles or connectors to secure the handle or connector to the pole handle connector 101. For example, the two end tabs 98A and 98B are used to secure the pole handle connector 101 to the pole handle connector chamber 45 and two tab ends 98C and 98D are used to secure the pole handle connector 101 to an assembly such as the handle 99.

FIG. 15 is an exploded view of the underwater cleaner with a handle extension, according to an aspect of the present disclosure. As shown, and as explained with reference to FIG. 14, the handle 99 is inserted over the pole handle connector 101 until a holes in the handle 99 are aligned with the tab end members 98A, 98B of the v-clip 98, at which time the tab end members 98A, 98B of the v-clip 98 extend through the hole in the handle 99, thus securing the handle 99 to the pole handle connector 101. This arrangement gives the user a greater degree of flexibility in that handles of various sizes may be used in conjunction with pole handle connector 101 and the arrangement shown in FIGS. 14 and 15.

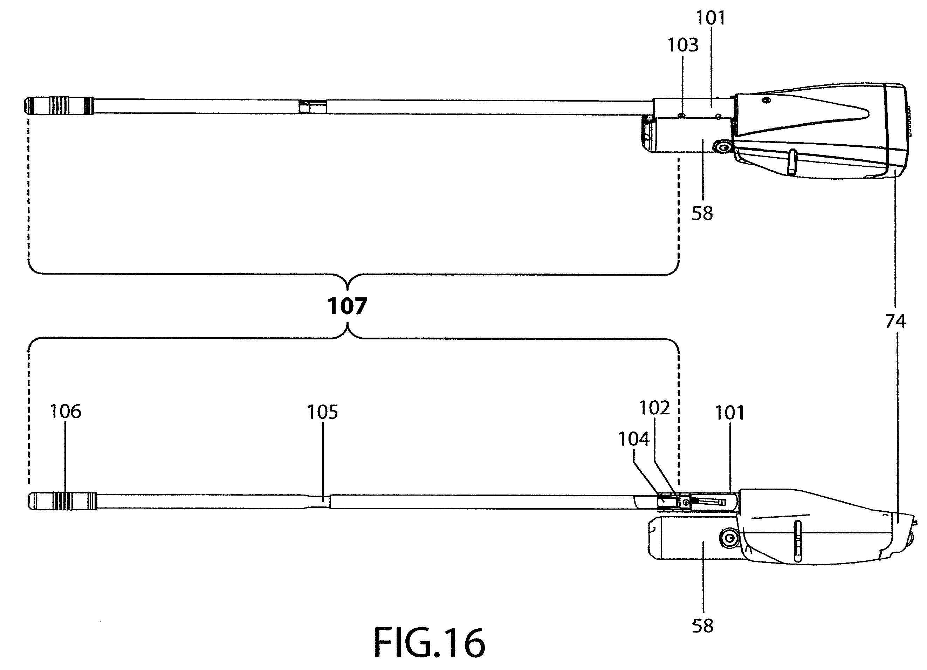

FIG. 16 is an exploded view of the underwater cleaner with an extension handle, according to an aspect of the present disclosure. In this arrangement, a pole section 107 includes a grip 106 by which the user may grasp the pole section 107 and a pole grooved end 105. The pole grooved end 105 is a tapered cylindrical end structure that is inserted into a non-tapered round opening of an extension pole connected to the pole handle connector 101. A pole threaded connector 104 is a connector having male threads for connection with female threads 102 of the pole handle connector 101. As such, a longer extension handle is provided to allow the user with greater reach during a cleaning operation..

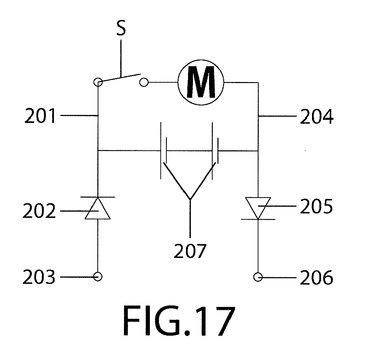

FIG. 17 is a schematic circuit diagram of the circuit arrangement of the cleaner 21. As shown, the circuit includes a motor "M", a switch "S", a battery positive lead 201, a negative lead 204, diodes 202, 205, a positive contact 203, a negative contact 206, and a battery 207. Any combination of diodes, leads, resistors, variable resistors, relays, switches, capacitors, and other electrical elements may be used to provide suitable circuitry to charge the battery and deliver current from the battery to the motor upon actuation of a switch and to operate the cleaner 11. The positive contact 203 and the negative contact 206 correspond to the pair of electrical contacts disposed within the charging holes in the rear of the rear body that can be electrically connected to the pair of charging pins 85. The battery 207 corresponds to the battery 67 as previously discussed.

When the flexible membrane ON/OFF switch 60 is depressed to actuate power ON/OFF switch 72, the output power from the battery 207 is used to drive the motor M. When the motor 65 is turned ON, the shaft 63 is driven to rotate the impeller 62.

In another embodiment, the motor 65 is a multi-speed or variable speed motor, such that repeated depression of the flexible membrane switch 60 cycles the selection of a speed of the motor 65 between low, medium, and high.

In this fashion, a user can determine the speed of the motor to modify the speed of the impeller, thus creating a customizable suction force. In this embodiment, an LED display or indicator light may be mounted on the suction head body 22, so as to indicate the current motor speed setting selected.

In another embodiment, an LED display or indicator light maybe provided to indicate an amount of charge residing in the battery and/or whether charging is currently taking place. In this fashion, the user can visually detect the charge in the battery and when the battery should be charged. Similarly, the user could visually discern whether or not charging is occurring.

In another embodiment, at least one lighting source is provided on an exterior of the cleaner 21 so that the user can operate the cleaner 21 in low ambient light conditions, or when the water in which the cleaner 21 is being operated is stained or murky. In this fashion, the lighting source is powered by the battery pack 67. For example, a strip of LED headlights may be attached to the suction head cover 24, or elsewhere on the cleaner 21.

In operation, a user can connect an appropriate handle length to the pole handle connector 101 in the pole handle connector assembly chamber 45, prior to a cleaning operation. Then, the user will depress the flexible ON/OFF switch 60, which is electrically and/or mechanically connected to the power ON/OFF switch 72, which turns the motor 65 ON. As indicated, when the motor 65 is turned ON, the shaft 63 rotates causing the impeller 62 attached to the shaft 63 to also rotate. When the impeller 62 rotates, a suction force is generated to open the flexible flapper 29 to intake water through the inlet opening 28 when the user places the cleaner in the water for a cleaning operation and moves the cleaner about a surface to be cleaned or suspended above the surface in order to remove debris suspended about the bottom of, for example, a pool. As the water traverses the filter 52, particulate and debris from the water is filtered from the water by the filter net 54 and trapped in the first cavity 22A of the suction head body 22. After the water traverses the filter 52, the water passes in the water discharge channel 51 around the impeller 62 and contacts the motor compartment front plate 56. The water then bounces off the motor compartment front plate 56 and exits the cleaner 21 through the side slot opening 49.

After a cleaning operation, the user depresses the flexible ON/OFF switch 60, which turns the motor 65 OFF. The user may clean the filter 52 and remove debris from the first cavity 22A of the suction head body 22, by removing the suction head cover 24 in the manner discussed. The filter 52 may be removed completely in order to easily remove debris collected inside, and to thoroughly clean, for example, with a garden hose, if necessary or desired. In an alternative embodiment, the first cavity 22A of the suction head body 22 is transparent to allow ease of visual contents therein, and includes a press button to disengage from the remainder of the suction head body 22.

Accordingly, the present invention enables an efficient and simplified underwater cleaning apparatus having a unified body and practical charging system.

Although the underwater cleaner has been described with reference to several exemplary embodiments, it is understood that the words that have been used are words of description and illustration, rather than words of limitation. Changes may be made within the purview of the appended claims, as presently stated and as amended, without departing from the scope and spirit of the invention in its aspects. Although the invention has been described with reference to particular means, materials and embodiments, the invention is not intended to be limited to the particulars disclosed; rather the invention extends to all functionally equivalent structures, methods, and uses such as are within the scope of the appended claims.

The illustrations of the embodiments described herein are intended to provide a general understanding of the structure of the various embodiments. The illustrations are not intended to serve as a complete description of all of the elements and features of the disclosure described herein. Many other embodiments may be apparent to those of skill in the art upon reviewing the disclosure. Other embodiments may be utilized and derived from the disclosure, such that structural and logical substitutions and changes may be made without departing from the scope of the disclosure. Additionally, the illustrations are merely representational and may not be drawn to scale. Certain proportions within the illustrations may be exaggerated, while other proportions may be minimized. Accordingly, the disclosure and the figures are to be regarded as illustrative rather than restrictive.

One or more embodiments of the disclosure may be referred to herein, individually and/or collectively, by the term "invention" merely for convenience and without intending to voluntarily limit the scope of this application to any particular invention or inventive concept. Moreover, although specific embodiments have been illustrated and described herein, it should be appreciated that any subsequent arrangement designed to achieve the same or similar purpose may be substituted for the specific embodiments shown. This disclosure is intended to cover any and all subsequent adaptations or variations of various embodiments. Combinations of the above embodiments, and other embodiments not specifically described herein, will be apparent to those of skill in the art upon reviewing the description.

According to an aspect of the present disclosure, an underwater cleaning apparatus includes an inlet opening through which water is received, a body having a first cavity and a second cavity, a filter being positioned in the first cavity and having a first end positioned adjacent the inlet opening and a first end of the first cavity, a housing including a motor and a battery, a portion of the housing being positioned in the second cavity and a portion of the housing extending out of the second cavity, and an impeller positioned in the body between the first cavity and the second cavity, the impeller being configured to draw in water through the inlet.

According to a further aspect of the present disclosure, the inlet opening is positioned in a cover removably attachable to the first cavity via at least one rib on the cover mating with at least one notch on the body.

According to a further aspect of the present disclosure, the cover, when attached to the first cavity, is configured for removal from the first cavity via prying adjacent to a flange on the cover, the flange including a raised projection extending in a lateral direction across a portion of the cover.

According to a further aspect of the present disclosure, water passing through the first cavity is discharged through an opening in the body, the opening in the body including a space between the first cavity and the second cavity.

According to a further aspect of the present disclosure, the space between the first cavity and the second cavity extends through a first lateral side wall of the body and through a second lateral side wall of the body.

According to a further aspect of the present disclosure, a plate is included in the body that is configured to direct the water to the opening in the body.

According to a further aspect of the present disclosure, the impeller is positioned adjacent to the plate.

According to a further aspect of the present disclosure, the impeller is positioned forward of the plate.

According to a further aspect of the present disclosure, the first end of the filter is positioned between the inlet opening and the first end of the first cavity.

According to yet another aspect of the present disclosure, an underwater cleaning apparatus includes a cover having an inlet opening, a body having an opening at a point between a first end of the body and a second end of the body, a plate in the body aligned with the opening in the body and configured to direct a flow of water to the opening in the body, a filter having a first end positioned at a front end of the body and supporting a filter, an impeller positioned in the body, a housing including a motor and battery, at least a portion of the housing being positioned in the body rearwardly of the opening in the body, in which the body is configured for the transport of water from the first end of the body to the opening in the body.

According to a further aspect of the present disclosure, the cover is removably attachable to the front end of the body via at least one rib on the cover mating with at least one notch on the front end of the body.

According to a further aspect of the present disclosure, the cover, when attached to the front end of the body, is configured for removal from the front end of the body via prying adjacent to a flange on the cover, the flange including a raised projection extending in a lateral direction across a portion of the cover.

According to a further aspect of the present disclosure, the opening in the body includes a space extending through the body in a lateral direction.

According to a further aspect of the present disclosure, the space extends through a first lateral side wall of the body and through a second lateral side wall of the body.

According to a further aspect of the present disclosure the filter includes a net extending within the body and being spaced from the impeller to create a space between the filter and the impeller.

According to a further aspect of the present disclosure, the impeller is positioned adjacent to the plate.

According to a further aspect of the present disclosure, the impeller is positioned forward of the plate.

According to a further aspect of the present disclosure, the housing is cylindrically-shaped.

According to yet another aspect of the present disclosure, an underwater cleaning apparatus includes an inlet opening through which water is received, a body having a first end and a second end, a filter attached at a first end in the body, a housing including an end cover, a motor and a battery, at least a portion of the housing being positioned in a second end of the body, an impeller positioned in the body, and a charging socket positioned in the end cover of the housing, the charging socket including a pair of contacts disposed within charging holes in the end cover of the housing, the pair of contacts being configured for electrical communication with a pair of charging pins of a removably attachable charger to charge the rechargeable battery, in which the pair of charging pins are configured to hold the charger to the end cover of the housing.

According to a further aspect of the present disclosure, the underwater cleaning apparatus includes a channel configured to allow for drainage of water from the charging socket.

The Abstract of the Disclosure is submitted with the understanding that it will not be used to interpret or limit the scope or meaning of the claims. In addition, in the foregoing Detailed Description, various features may be grouped together or described in a single embodiment for the purpose of streamlining the disclosure. This disclosure is not to be interpreted as reflecting an intention that the claimed embodiments require more features than are expressly recited in each claim. Rather, as the following claims reflect, inventive subject matter may be directed to less than all of the features of any of the disclosed embodiments. Thus, the following claims are incorporated into the Detailed Description, with each claim standing on its own as defining separately claimed subject matter.

The preceding description of the disclosed embodiments is provided to enable any person skilled in the art to make or use the present disclosure. As such, the above disclosed subject matter is to be considered illustrative, and not restrictive, and the appended claims are intended to cover all such modifications, enhancements, and other embodiments which fall within the true spirit and scope of the present disclosure. Thus, to the maximum extent allowed by law, the scope of the present disclosure is to be determined by the broadest permissible interpretation of the following claims and their equivalents, and shall not be restricted or limited by the foregoing detailed description.

## Claims

1. An underwater cleaning apparatus comprising:
an inlet opening (28) through which water is received;
a body (22) having a first cavity (22A) and a second cavity (22B);
a filter (52) being positioned in the first cavity (22A) and having a first end positioned adjacent the inlet opening (28) and a first end of the first cavity (22A);
a housing (23) comprising a motor (65) and a battery (67), a portion of the housing being positioned in the second cavity (22B) and a portion of the housing extending out of the second cavity (22B); and
an impeller (62) positioned in the body (22) between the first cavity (22A) and the second cavity (22B), the impeller (62) being configured to draw in water through the inlet opening (28).

2. The underwater cleaning apparatus according to claim 1, wherein the inlet opening (28) is positioned in a cover (24) removably attachable to the first cavity (22A) via at least one rib (31) on the cover (34) mating with at least one notch (43, 44) on the body (22).

3. The underwater cleaning apparatus according to claim 2, wherein the cover (24), when attached to the first cavity (22A), is configured for removal from the first cavity (22A) via prying adjacent to a flange (32) on the cover (24), the flange (32) comprising a raised projection extending in a lateral direction across a portion of the cover (24).

4. The underwater cleaning apparatus according to any one of claims 1 to 3, wherein water passing through the first cavity (22A) is discharged through an opening (49) in the body (22), the opening (49) in the body (22) comprising a space between the first cavity (22A) and the second cavity (22B).

5. The underwater cleaning apparatus according to claim 4, wherein the space between the first cavity (22A) and the second cavity (22B) extends through a first lateral side wall of the body and through a second lateral side wall of the body.

6. The underwater cleaning apparatus according to claim 4 or 5, further comprising a plate (56) in the body (22) configured to direct the water to the opening (49) in the body (22).

7. The underwater cleaning apparatus according to claim 6, wherein the impeller (62) is positioned adjacent to the plate (56).

8. The underwater apparatus according to claim 6 or 7, wherein the impeller (56) is positioned forward of the plate (56).

9. The underwater cleaning apparatus according to any one of claims 1 to 8, wherein the first end of the filter (52) is positioned between the inlet opening (28) and the first end of the first cavity (22A).

10. An underwater cleaning apparatus according to any one of claims 1 to 9, wherein the body (22) has an opening (49) at a point between a first end of the body (22) and a second end of the body and wherein the body (22) is configured for the transport of water from the first end of the body to the opening (49) in the body (22).

11. The underwater cleaning apparatus according to any one of claims 1 to 10, wherein the filter (52) comprises a net (54) extending within the body and being spaced from the impeller (62) to create a space between the filter (52) and the impeller (62).

12. The underwater cleaning apparatus according to any one of claims 1 to 11, wherein the housing (23) is cylindrically-shaped.

13. An underwater cleaning apparatus according to any one of claim 1 to 12 further comprising a charging socket (89) positioned in the end cover (59) of the housing, the charging socket (89) comprising a pair of contacts disposed within charging holes in the end cover (59) of the housing (23), the pair of contacts being configured for electrical communication with a pair of charging pins (85) of a removably attachable charger (81) to charge the rechargeable battery (67), wherein the pair of charging pins (85) are configured to hold the charger (81) to the end cover (59) of the housing (23).

14. The underwater cleaning apparatus according to claim 13, further comprising:
a channel (92) configured to allow for drainage of water from the charging socket (89).
